Europäisches Patentamt

(19) European Patent Office

Office européen des brevets

(11) Publication number: **0 117 665**
**B1**

(12) **EUROPEAN PATENT SPECIFICATION**

(45) Date of publication of patent specification: **07.01.88**

(21) Application number: **84300774.1**

(22) Date of filing: **07.02.84**

(51) Int. Cl.⁴: **G 01 N 1/02**

(54) Apparatus for sampling similar laminar articles.

(30) Priority: **11.02.83 GB 8303770**

(43) Date of publication of application:
**05.09.84 Bulletin 84/36**

(45) Publication of the grant of the patent:
**07.01.88 Bulletin 88/01**

(84) Designated Contracting States:
**AT BE CH DE FR GB IT LI LU NL SE**

(56) References cited:
**FR-A-2 068 592**
**GB-A-1 154 368**
**GB-A-2 068 870**
**US-A-3 881 356**
**US-A-3 921 821**

(73) Proprietor: **BAKER PERKINS PLC**
**Westfield Road**
**Peterborough Cambridgeshire PE3 6TA (GB)**

(72) Inventor: **Lawson, Robert**
**4 Clayton Walk**
**Little Chalfont Amersham Bucks (GB)**
Inventor: **Maris, Peter Ian**
**33 Old Watford Road**
**Bricket Wood St. Albans Herts (GB)**
Inventor: **Mason, Malcolm Jeffrey**
**89 Claremont**
**Bricket Wood St. Albans Herts (GB)**

(74) Representative: **Boutland, John Anthony et al**
**8, Heatherstone Avenue**
**Hythe Southampton SO4 5LQ (GB)**

Courier Press, Leamington Spa, England.

## Description

This invention relates to apparatus for sampling similar articles. The apparatus is particularly but not exclusively suitable for sampling and recording the dimensions of similar articles such as biscuits.

In a modern biscuit baking plant, doughpieces are continuously made, either by extruding dough into a rotary moulder, or by cutting doughpieces from a continuous sheet using reciprocating or rotary cutters. The doughpieces, deposited on to a continuous moving band, are then carried into and through an oven for baking, and emerge therefrom on a conveyor.

Two of the properties of the biscuits which must be continuously and accurately assessed and controlled are the weight and thickness, preferably immediately after leaving the oven. An object of the invention is to measure these two properties automatically at fixed, small intervals of time. It is possible to extend the scope of the apparatus to measure other properties such as crust colour and moisture content.

According to the invention, apparatus for sampling similar articles being transported on the surface of a conveyor, comprises a detection means for detecting the location of articles being transported on the conveyor band surface, article pick-up transfer means disposed downstream of the article detecting means, and means for transmitting a signal from the detection means to the article pick-up transfer means being operable to pick up the detected articles one at a time, directly off the conveyor surface, characterised in that means for collecting articles being laminar are provided at the predetermined position, cooperating with the article pick-up transfer means so as to collect into a vertical stack a predetermined number of the picked-up articles transferred thereto by the article pick-up transfer means, collection controlling means, e.g. a ram, cooperating with the article collection means, for periodically returning to the surface of the same conveyor, the bottom one only of the articles previously transferred to the stack in response to the subsequent transfer to the top of the stack of each additional article, to maintain the said predetermined number of articles present in the stack at the article collection means, property measuring means for periodically determining the magnitude of a property of the predetermined number of articles collected as a vertical stack at the article collection means and generating a corresponding property measurement signal thereby, and signal processing means, e.g. a computer, for processing the detection signals and the property measurement signals, respectively, and thereby providing a data output signal representing the magnitude of the property of the articles.

FR—A—2 068 592 and GB—A—1 154 368 each discloses apparatus as set forth in the non-characterising portion of the preceding paragraph. However, neither apparatus has the characterising features of the present invention. Furthermore, the FR—A—2 068 592 apparatus would be unsuitable for the continuous monitoring of biscuits, and that of GB—A—1 154 368, although concerned with biscuits, would tend to over-handle fragile biscuits, and, in addition deals with a batch for each cycle of measurement.

In the following description reference is made to biscuits and biscuit baking plants. However, the apparatus is applicable to any plant making articles of comparable size and weight, i.e. laminar in form and preferably light enough to be picked up by suction.

Reference is now made to the accompanying drawings, in which:—

Figure 1 is a diagrammatic side view of apparatus according to a preferred embodiment of the invention, and

Figures 2a, 2b and 2c are plan views of biscuits on a conveyor band, and illustrate the detection of their position by means of photocells.

The apparatus, which is for sampling biscuits, consists of an assembly 11 stationed above a moving biscuit-carrying conveyor band 7 at a point close to the delivery end of a biscuit oven, an assembly which has some of the qualities of a robot in that it has the capability of handling biscuits 8 and is reprogrammable. It also has the capability of traversing the width of the moving band 7 so that any file of biscuits 8 can be selected according to a predetermined program. To achieve this capability, the assembly 11 rests on beams 14, 15 fixed transversely across the band 7 and a rotary member 16 on the assembly 11 engages with a rack 17 attached to beam 14. The driving motor 18 for the cross motion is thus, in this embodiment, an integral part of the assembly 11. In an alternative embodiment it is possible to effect the cross motion by means of a lead screw and nut and the driving motor 18 can thereby be mounted externally of the assembly at the side of the band.

The conveyor band 7 moves in the direction of arrow 10.

In order to simplify the description of the operation of the assembly 11 it will be advantageous to assume it to be at a fixed point above the conveyor band 7, approximately over one file of biscuits 8. Biscuit detecting means comprising a biscuit-detecting member 1 fixed to the assembly 11 houses two or more photo-electric cells which are facing downward towards the band 7 and are quite close to it (in the order of 10 to 15 mm). Each cell can thus sense the presence or absence of a biscuit 8 and can accordingly send signals to the controlling computer (not shown, but also integral with the main assembly). By this means, two purposes are served, namely:—

(a) that transverse movements can be given to the assembly 11 in order to keep it centered over the biscuit file, and

(b) that the leading or trailing edge of a biscuit 8 can be sensed in order to enable accurate pick-up of a biscuit by biscuit pick-up transfer means, comprising a pick-up head 21, about to be described.

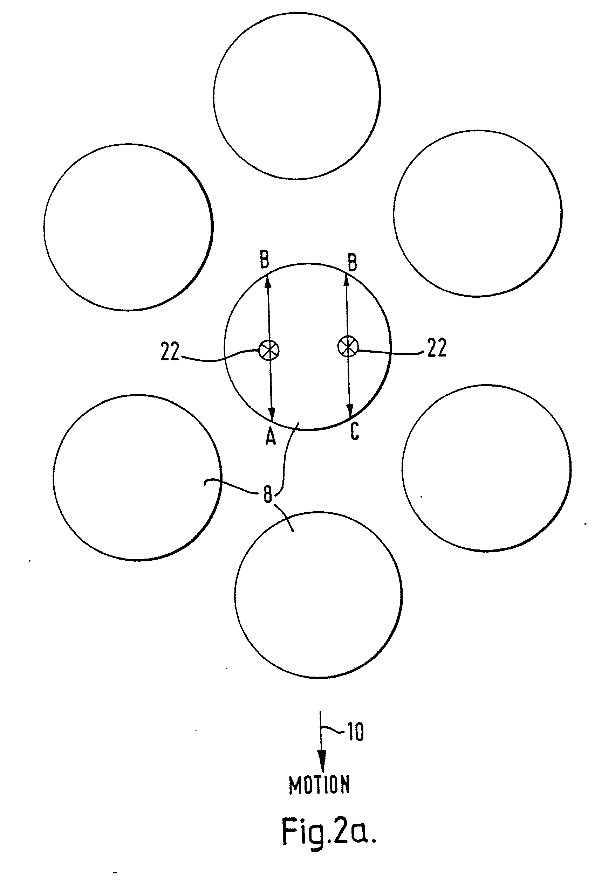

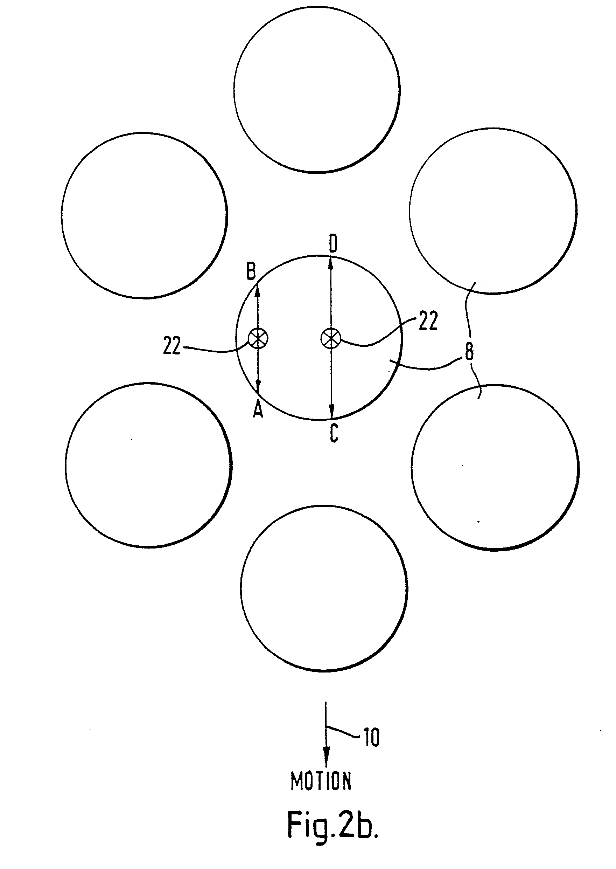

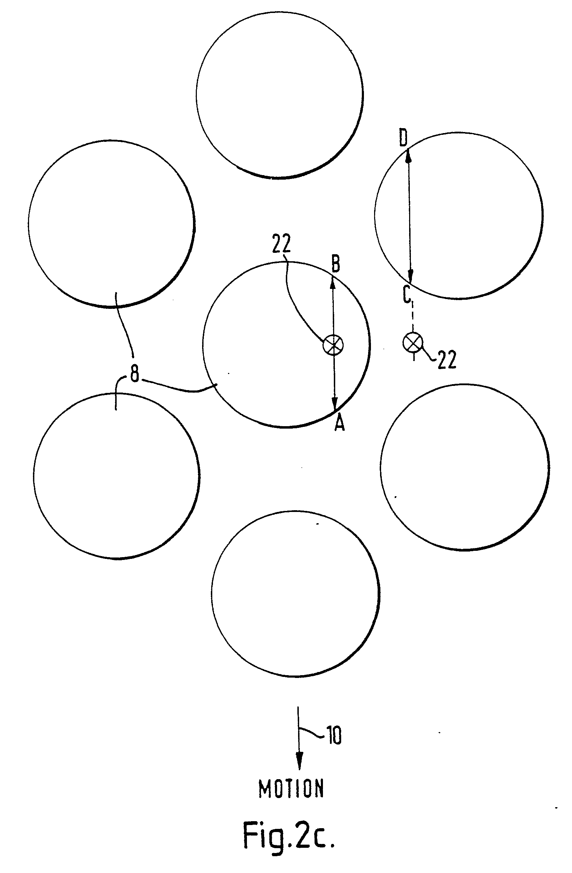

The photocells of the biscuit-detecting member 1 are shown in Figure 2a; identified by reference numeral 22.

The pick-up head 21, which operates by suction, is a hollow cylinder 2 with its axis vertical. When the head 21 is fully down, its axis is centered over the same file of biscuits 8 as the detecting member 1 and is some distance "downstream" (say 100 mm) thereof. Thus, when the photo-electric cells of the biscuit-detecting members 1 sense the leading edge of a biscuit 8 they send signals to the computer, which allows for the time necessary for the biscuit to move into a position directly under the pick-up head 21 before sending signals to a solenoid (not shown) which permits compressed air to enter the pick-up head 21 and initiate suction. Suction set up in the pick-up head 21 then draws up the biscuit 8 and holds it against the lower edge of the cylinder 2. It is to be noted that contact between the biscuit 8 and the pick-up head 21 is not necessary for pick-up to occur, and that the head 21 is entirely stationary during the pick-up operation.

Once a biscuit 8 is picked up by the head 21, a photocell in the head senses the presence of the biscuit and sends a confirmatory signal to the computer. In one embodiment, there are at least two photocells inside the pick-up head 21 so as to give confirmation that the biscuit 8 is accurately positioned on the head. If the head photocell(s) does not give confirmation of a successful pick-up, suction is switched off and a new pick-up cycle is started. If subsequent pick-up attempts are unsuccessful, after a count of (say) eight, the carriage of the assembly 11 is re-aligned over the file of biscuits 8 and further attempts at a pick-up are made.

After a successful pick-up the computer then sends signals to a motor (not shown) which drives a mechanism 25 which raises the pick-up head 21 to an upper position. A laterally positioned arm 23, on which the pick-up head 21 is mounted, engages in a spiral slot 24 in a vertical cylinder 3. As the pick-up head 21 is raised, the spiral slot 24 causes the head to move in an upward spiral path so that when it reaches the highest point, the pick-up head 21 has swung through an angle of 180 degrees and has thereby moved a distance downstream of about 300 mm. During this movement, suction is maintained by the head 21, with the biscuit 8 still in position. The biscuit 8 is now stationed at a measuring station, above a stack 4 of (say) ten biscuits 8 resting on a biscuit weighing means comprising a platform 27 to which is attached a set of load cells (not shown). The platform 27 comprises part of biscuit collection means 28. The output from the load cells gives a signal proportional to the weight of the stack of biscuits 8. Before the suction is released by the pick-up head 21, the weight of the old stack is read in by the computer. Then the lowest biscuit 8 in the stack 4 is ejected by a pneumatic ram (not shown) and falls on to the conveyor band 7. The stack 4 is then again weighed and the weight of the diminished stack compared in the computer with the previously recorded weight. If the difference is of such a magnitude as to indicate that a whole biscuit has been ejected, the machine moves on to the next stage in the cycle. If the difference indicates that a normal ejection has not occured, the apparatus goes into a "clear down" routine to be described later.

The next stage in a normal cycle is for suction at the pick-up head 21 to be switched off. This causes the new biscuit 8 to fall on to the top of the diminished stack, thus restoring it to its normal number. The photocell in the pick-up head 21 is used by the computer to check that the new biscuit has been released and the load cells take the weight of the stack and calculates that the new biscuit is normal before going on to the next action, which is to switch on and reverse the lifting motor of the pick-up head 21. The head 21 thus returns to its (original) lower position ready to pick up the next biscuit in the cycle.

A function of the apparatus which has not so far been described is the measurement of the height of the biscuit stack 4. This is effected by property measuring means 40 comprising a vertically mounted linear displacement transducer (LDT) 5 having a movable member 31 weighted so as to fall to its lowest position in the absence of restraint. When the pick-up head 21 is down, the movable member 31 of the LDT is able to fall so as to come into contact with the upper surface of the biscuit stack. In this position, the computer is therefore able to read the height of the biscuit stack. The load cells are not at this time able to measure biscuit weight because of the weight of the member 31 resting on the biscuit stack. Advantage of this state is taken to carry out automatic calibration of the load cells. The member 31 is made to a given weight so that the load cell signal contains two components, namely a component due to the weight of the biscuit stack and another due to the known weight of the member 31. A simple subtraction then enables the computer to equate the known weight of the member 31 to the load cell signal derived from it and so a spot calibration is achieved for each cycle of the apparatus. An alternative piece of information can be obtained from the weight of the member 31 if desired. If the weight of the member 31 is increased to a value which pushes the load cells against their stops, a value for weight tare can be obtained, that is, the signal from the load cells corresponding to zero weight on the platform 27. Thus a value for tare can be obtained every time a biscuit 8 is changed, instead of once an hour at the clear down routine as described below.

In order to weigh the biscuit stack without the member 31 resting on it, the LDT 5 can be moved in an upward spiral to an extent sufficient to lift the member 31 clear of the biscuit stack. The upper movement of the LDT 5 is guided by a cylinder 6 attached thereto and having a spiral slot 34. Lifting of the LDT 5 is activated by the upward movement of the pick-up head 21. During the later portion of the upward travel of the pick-up head 21, a surface 35 at the top of the pick-up head 21 engages with a corresponding part of the LDT 5 and the LDT is thereafter lifted by the pick-up head 21 in a pick-a-back fashion. In other embodiments of the apparatus, other methods of measuring the height of the stack can be used, for example, by optical means in which the lateral movement of a spot of light is used to indicate changes in the height of the surface on which the spot is focused.

Biscuit weight, stack height, and any other information measured or calculated by the apparatus can be accessed in two ways, by a digital display on the instrument itself, or at a set of electrical terminals either as analogue or digital signals capable of being connected to a strip-chart recorder or to another computer or to any other external device.

Normal cycling of the apparatus has now been described. The next function to be described has already been referred to as the clear down routine. This routine normally comes into action once an hour but it can, as already indicated, come into action as the result of a fault occurring. When the clear down routine is initiated, normal operation is suspended, the pick-up head 21 is lifted to its upper position, and suction is switched off. The biscuit ejecting mechanism referred to above is then operated eleven times (assuming there to be ten biscuits on the stack) and between each ejection the weight of the biscuit stack checked to ensure that a biscuit has in fact gone. With all biscuits ejected, the surface of the biscuit platform 27 is purged with a jet of air to remove loose crumb, and the weight read by the computer to re-establish the tare. Thus, the zero weight condition is measured each hour, giving a second calibration check on the load cells. If the new tare is too great, it is assumed that part of a broken biscuit 8 has become wedged on the weighing platform, and the apparatus goes into a fault routine. If all is in order, the computer initiates the picking up of a new stack of biscuits, the weight of each biscuit being checked as it is loaded, until the required number is reached. What the hourly clear down routine achieves is —

(a) a clearing of loose crumb from the weighing platform,

(b) a check of the zero weight state (tare),

(c) a precautionary renewal of the biscuit stack to guard against broken and/or misaligned biscuits, and the possibility of the count of biscuits in the stack having somehow gone wrong. Of the faults which initiate a clear down routine, the principal one is when the weight of a new biscuit 8 added to stack is too small. This is taken to indicate that the new biscuit might be broken or a seriously deformed or lightweight piece. Another fault would be the converse, a seriously overweight piece, indicating a possible double biscuit. If the photocells of the biscuit detecting member 1 indicate that production of biscuits may have stopped, the first half of the clear down routine is entered, i.e. the stack is emptied but not refilled. The photocells then continue to scan the empty band until fresh biscuits appear and the stack is then recharged.

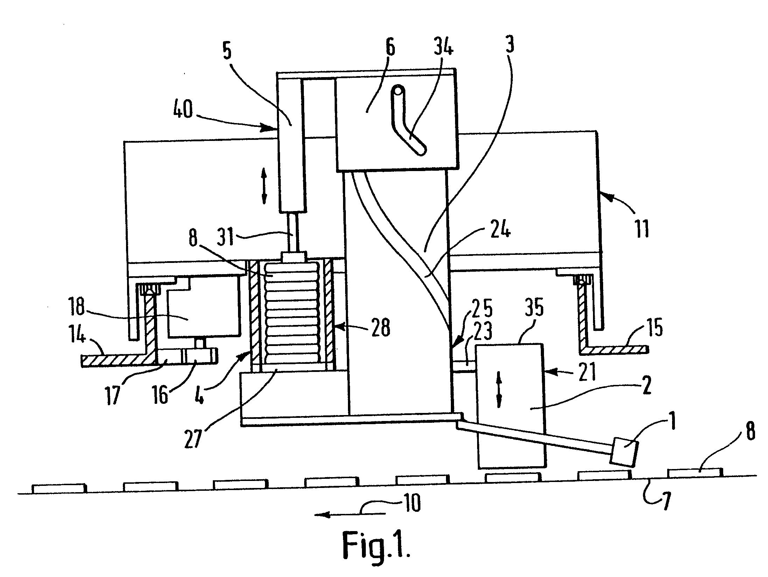

It has already been indicated that transverse location of the apparatus is effected from the photocells of the detecting member 1 scanning the biscuits 8 as they pass underneath. The system for detecting the centerline of the biscuits 8 may depend on the shape of the biscuits. From this point of view the great majority of biscuits fall into two categories, elliptical and rectangular, of which circles and square are members. In both cases, detection of the center line can be done with the aid of two photocells, but the method of detection is different for each category. In the case of elliptical biscuits the transversely mounted photocells 22 (Figures 2a to 2c) are spaced apart a distance equal to about one third the diameter of the ellipse lying transversely across the band. As the biscuits 8 pass beneath the photocells 22, they receive "on" signals having durations proportional to chordal lengths of the ellipse. When these lengths are coincident both in extent and in time, as in the case of chords A—B and B—C of Figure 2a, the two photocells 22 are exactly straddling the longitudinal centre line of the ellipse and no lateral correction is necessary. If the left chord is greater than the right, as in the case of chords A—B and C—D of Figure 2b, the pick-up head 21 (Figure 1) is right of the biscuit center, and a leftward movement should be initiated in order to correct the error, and vice versa. If the chords are equal in length but not coincident in time, as in the case of chords A—B and C—D of Figure 2c, the pick-up head 21 is exactly above the line between two files of biscuits. In this case the computer is programmed to move either to the left or right for a distance equal to about one third of a biscuit diameter from which position it is able to locate the file center line in the usual way.

In practice it is not advantageous to initiate sideways movement on information coming only from one biscuit, because the biscuits may not always lie in exactly linear files as the biscuits may be subject to random lateral scatter at some point in the process. To meet this condition, the computer is programmed to calculate the average of chordal lengths from eight biscuits before making a move and it then ignores the next eight. This procedure makes for greater stability of the apparatus. A dead-band of about 5 mm also helps to avoid excessive movement of the carriage.

For rectangular biscuits the photocells 22 are preferably spaced apart an amount equal to half the average lateral distance between the center lines of adjacent files. In operation, one photocell 22 is arranged to sit over the center line of the file which is being scanned. The other photocell 22 will then scan nothing but an empty conveyor band 7, and this is taken as the stable position. In practice the small space between adjacent files will act as a dead band.

The movement of the apparatus across the whole conveyor band 7 will now be described. Normally the managers of a biscuit plant require information about the qualities of biscuits from across the whole band rather than from a fixed part of it. To achieve this requirement, the apparatus has mechanical means of driving itself across the whole band such as a rack and pinion as already mentioned. At each side of the conveyor band 7 will be a fixed dog which is able to engage with a microswitch mounted on the assembly and connected electrically to the computer. Alternatively, the dogs and microswitches can be replaced by solid-state proximity switches operating on magnetic, inductive or optical principles. These switches give the computer a means of determining with adequate accuracy (say 5 mm) that the assembly has reached one of its limiting positions at the sides of the conveyor band 7. When the apparatus is not operating it will normally stand at one side of the band 7 — known as the parking side. When the apparatus receives an instruction to begin operation, it will move away from the parking side, keeping a record of distance travelled from the parking position, either by timing its motion, or by the use of a means of measuring lateral position such as a potentiometer geared to the driving motor. As the apparatus moves across the conveyor band 7, the photocells 22 of the biscuit-detecting member 1, will sense the presence of biscuits 8 and will relate the lateral position of biscuit files across the band to the absolute position at which the biscuits are sensed. Thus a map of biscuit files is created in the memory of the computer, which is continually updated.

Permanently stored in the computer will be a program for sampling biscuits across the band. For example, it might be decided that only even files should be sampled both on the outward and inward pass of the apparatus so that, leaving the parking position, files 2, 4, 6 etc. would be sampled and leaving the other side, files 20, 18, 16 etc. would be sampled. Clearly any repetitive sequence of the sort could be programmed. The weight and thickness of the stack as recorded by the apparatus in such circumstances can be analysed in a variety of ways according to management requirements. The simplest method is simply to calculate running means of weight and stack height. Alternatively, the weight and thickness of each biscuit 8 can be taken separately and used to create a running profile of biscuit weight and stack height across the conveyor band 7. The same information can be used to give a prediction of packet weight, either as a general figure or, in a plant which has two checkweighers, as a separate figure for each half of the band.

As mentioned above, the apparatus has some capability of detecting its own faults. Some of the faults it can check are:—

(a) When the pick-up head 21 engages with the stack height measuring mechanism, signals from the stack height transducer 5 can be read by the computer and checked against previous readings to ensure both that the stack height mechanism and transducer are in good order.

(b) When the pick-up head begins to move upwards from its lowest position a time of one second is allowed to elapse and then the upper and lower limit switches are checked to ensure that they are in a "not operated" state. A similar procedure can be adapted for downward motion. These tests check that the pick-up head 21 does move vertically in response to appropriate signals, and/or that the limit switches are in order.

(c) The times for raising and lowering the pick-up head 21 are compared with expected values to ensure that the appropriate mechanism is in good order.

(d) The stack weights before and after clear down are compared. Any substantial discrepancy indicates either that the old or the new stack was faulty. The apparatus stops operating and displays a fault signal.

(e) Across the conveyor band 7, times between biscuit files are used to check that the cross-motion mechanism is in order.

When a fault has been detected, an appropriate signal appears on an indicator panel mounted on the body of the apparatus and all indicators go into a flashing mode to attract attention.

Advantages of the invention include the following features:—

(a) An improved method of biscuit pick-up. Suction pick-up is not unknown in the baking industry, but the method described, which is contactless, has not been seen. Other methods of suction pick-up which involve the use of a flexible suction head pressed into contact with the object are not suited to picking up rapidly moving objects with a high degree of positional accuracy. Non-suction methods of pick-up such as knife edges combined with moving conveyor bands are also very difficult to implement in practice with reliability. They also tend to cause excessive disturbance of biscuits from their desired position on the band and can thereby create difficulties further on in the process.

(b) The suction method of pick-up leads logically to an improved method of loading the biscuit stack 4. Other methods of pick-up usually lead to a method of loading the stack which imparts a sideways motion to the biscuit, and this can give rise to problems. In particular, it makes successful loading from scratch almost impossible. The suction system avoids sideways motion and loading the stack starting with an empty platform becomes easy.

(c) The use of a reflective photocell 22 to detect the leading or trailing edge of a biscuit 8 so as to enable a biscuit to be picked up with longitudinal accuracy by the pick-up head 21.

(d) The use of two reflective photocells 22 to detect the biscuits and to measure the lateral position of the pick-up head 21 in relation to the center-line of a file of biscuits 8.

(e) The use of two or more photocells 22 mounted within the pick-up head 21 to determine whether the picked-up biscuit is in a correct relationship to the head.

(f) The ability to clear down the biscuit stack at chosen times so as to check the tare of the weighing system and to clear crumb and defective biscuits.

(g) The use of the member 31 of the stack height transducer 5 to calibrate automatically the weighing system.

(h) The ability of the apparatus to traverse across the conveyor band 7 and, by the use of photocells 22 itemised under (d), to automatically relate the center lines of biscuit files to absolute linear position across the band.

## Claims

1. Apparatus for sampling similar articles (8) being transported on the surface of a continuous band conveyor (7) comprising a detection means (1) for detecting the location of articles being transported on the conveyor band surface, article pick-up transfer means (21), disposed downstream of the article detection means (1), and means for transmitting a signal from the detection means to the article pick-up transfer means when an article (8) is in a predetermined position with respect to the pick-up transfer means (21), the article pick-up transfer means (21) being operable to lift the detected articles (8) one at a time, directly off the conveyor surface (7), characterised in that means (28) for collecting articles being laminar are provided at the predetermined position, cooperating with the article pick-up transfer means (21) so as to collect into a vertical stack (4) a predetermined number of the picked-up articles (8) transferred thereto by the article pick-up transfer means (21), collection controlling means, e.g. a ram, cooperating with the article collection means (28), for periodically returning to the surface of the same conveyor (7) the bottom one only of the stack of articles (8) previously transferred to the stack (4) in response to the subsequent transfer to the top of the stack of each additional article (8), to maintain the same predetermined number of articles present in the stack at the article collection means (28), property measuring means (40, 5) for periodically determining the magnitude of a property of the predetermined number of articles (8) collected as a vertical stack at the article collection means (28) and generating a corresponding property measurement signal thereby, and signal processing means, e.g. a computer, for processing the detection signals and the property measurement signals, respectively, and thereby providing a data output signal representing the magnitude of the property of the articles (8).

2. Apparatus as claimed in Claim 1, characterised in that the article detection means (1) comprise at least two photocells (22) mounted in a head over the conveyor (7), the photocells being spaced apart transversely relative to conveyor movement and adapted to emit a signal indicating the presence of a laminar article (8) beneath, whereby analysis of the signals from the photocells (22) indicates the longitudinal and lateral position of respective laminar articles on the conveyor (7).

3. Apparatus as claimed in Claim 1 or 2, characterised in that the article pick-up transfer means (21) comprise a suction cylinder (2) mounted over the conveyor (7) and adapted to be actuated when a laminar article (8) is in close proximity thereto but not actually in contact therewith.

4. Apparatus as claimed in Claim 3, characterised in that it also comprises means (25) for moving the suction cylinder (2) to a position above a measuring station (27) where a stack (4) of laminar articles (8) may be maintained, and means for deactuating the suction cylinder (2) in the said position so as to load the stack (4) from above with an additional laminar article (8).

5. Apparatus as claimed in any one of Claims 1 to 4, characterised in that means (27) are provided to measure the weight of the stacked articles (8).

6. Apparatus as claimed in any one of Claims 1 to 5, characterised in that means (40, 5) are provided to measure the height of the stacked articles (8).

7. Apparatus as claimed in any one of Claims 1 to 6, characterised in that the signal processing means is operable to compare the magnitude of the measured property with a predetermined magnitude and if the comparison indicates a discrepancy outside a predetermined range then the article collection means (28) is cleared of all articles (8) collected thereby.

8. Apparatus as claimed in any one of Claims 1 to 7, characterised in that actuating means (16, 17, 18) are provided for moving the apparatus relative to the moving conveyor (7) so that the article pick-up transfer means (21) is located correctly with respect to articles (8) for transfer thereof to the article collection means (28).

## Patentansprüche

1. Vorrichtung zur Prüfung ähnlicher Artikel (8), die auf der Oberfläche einer Fließband-Förderanlage (7) transportiert werden, die eine Detektoreinrichtung (1) zur Erfassung der Position der auf der Fließbandoberfläche transportierten Artikel, eine Artikelaufgriffs-Überführungsvorrichtung (21), die unterhalb der Artikeldetektoreinrichtung (1) angeordnet ist, und eine Einrichtung zur Übertragung eines Signals von der Detektoreinrichtung zur Artikelaufgriffs-Überführungsvorrichtung, wenn ein Artikel (8) in einer hinsichtlich der Aufgriffs-Überführungsvorrichtung (21) vorbestimmten Position ist, die die erfaßten Artikel (8) nacheinander direkt von der Förderanlagenoberfläche (7) anheben kann, aufweist, dadurch gekennzeichnet, daß Vorrichtungen (28) zur Sammlung laminarer Artikel an einer bestimmten Position vorgesehen sind, die mit der Artikelaufgriffs-Überführungsvorrichtung (21) zusammenarbeiten, um eine festgelegte Anzahl von aufgegriffenen und ihnen von der Artikelaufgriffs-Überführungsvorrichtung (21) zugeführten Artikeln (8) in einen senkrechten Stapel (4) zu sammeln, und eine mit der Artikelsammelvorrichtung (28) zusammenarbeitende Sammelkontrolleinrichtung, zum Beispiel eine Aufstoßvorrichtung, zur periodischen Rückkehr zur Oberfläche derselben Förderanlage (7), wobei die unterste nur die Artikel überprüft, die vorher auf den Stapel gelegt wurden in Antwort auf die nachfolgende Weiterleitung auf die Spitze des Stapels jedes zusätzlichen Artikels (8), um die vorgegebene Anzahl der gegenwärtig im Stapel an der Artikelsammelvorrichtung (28) befindlichen Artikel aufrechtzuerhalten,

und eine Eigenschaftmeßeinrichtung (40, 5) zur periodischen Bestimmung des Umfangs einer Eigenschaft der vorgegebenen Anzahl von Artikeln (8), die als senkrechter Stapel bei der Artikelsammelvorrichtung (28) gesammelt wurden und zur Erzeugung eines entsprechenden Eigenschaftsmeßsignals,

und eine Signalverarbeitungsvorrichtung, zum Beispiel einen Computer, zur Verarbeitung der Detektorsignale bzw. der Eigenschaftsmeßsignale und der gleichzeitigen Lieferung eines Datenausgangssignals, das den Umfang der Eigenschaft der Artikel (8) darstellt.

2. Vorrichtung nach Anspruch 1, dadurch gekennzeichnet, daß die Artikeldetektoreinrichtung (1) mindestens zwei Photozellen (22) aufweist, die in einem Kopf über der Förderanlage (7) montiert, quer zur Förderanlagenbewegung beabstandet und so ausgelegt sind, daß sie ein Signal abgeben, das die Anwesenheit eines darunterliegenden, laminaren Artikels anzeigt, wobei die Analyse der Signale von den Photozellen (22) die Längsund Seitenposition des jeweiligen laminaren Artikels auf der Förderanlage (7) ergibt.

3. Vorrichtung nach Anspruch 1 oder 2, dadurch gekennzeichnet, daß die Artikelaufgriffs-Überführungsvorrichtung (21) einen Ansaugzylinder (2) aufweist, der über der Förderanlage (7) montiert und so ausgelegt ist, daß sie aktiviert wird, wenn ein laminarer Artikel (8) ganz in ihrer Nähe, jedoch ohne direkte Berührung ist.

4. Vorrichtung nach Anspruch 3, gekennzeichnet durch eine Vorrichtung (25) zur Bewegung des Ansaugzylinders (2) in eine Position oberhalb einer Meßstation (27), wo ein Stapel laminarer Artikel (8) erhalten bleiben kann, und eine Vorrichtung zur Deaktivierung des Ansaugzylinders (2) in der genannten Position, damit der Stapel (4) von oben mit einem zusätzlichen, laminaren Artikel beladen werden kann.

5. Vorrichtung nach einem der Ansprüche 1 bis 4, gekennzeichnet durch eine Vorrichtung (27) zur Messung des Gewichtes der gestapelten Artikel (8).

6. Vorrichtung nach einem der Ansprüche 1 bis 5, gekennzeichnet durch Vorrichtungen (40, 5) zur Messung der Höhe der gestapelten Artikel (8).

7. Vorrichtung nach einem der Ansprüche 1 bis 6, dadurch gekennzeichnet, daß die Signalverarbeitungseinrichtung den Umfang der gemessenen Eigenschaft mit einem vorbestimmten Umfang vergleichen kann, und daß, wenn der Vergleich eine Abweichung ergibt, die außerhalb eines bestimmten Toleranzbereiches liegt, alle gesammelten Artikel (8) aus der Artikelsammelvorrichtung (28) entfernt werden.

8. Vorrichtung nach einem der Ansprüche 1 bis 7, gekennzeichnet durch Aktivierungsvorrichtungen (16, 17, 18) zur Bewegung der Vorrichtung im Verhältnis zur sich bewegenden Förderanlage (7), so daß die Artikelaufgriffs-Überführungsvorrichtung (21) korrekt plaziert wird hinsichtlich der Artikel (8), die von ihr zur Artikelsammeleinrichtung (28) geleitet werden sollen.

**Revendications**

1. Dispositif pour échantillonner des articles semblables (8) en train d'être transportés sur la surface d'un convoyeur à bande continue (7), comprenant un moyen de détection (1) pour détecter la position d'articles en train d'être transportés sur la surface de bande du convoyeur, un moyen de saisie/transfert d'articles (21) disposé en aval du moyen de détection d'articles (1), et un moyen pour transmettre un signal du moyen de détection au moyen de saisie/transfert d'articles quand un article (8) se trouve dans une position prédéterminée par rapport au moyen de saisie/transfert (21), le moyen de saisie/transfert d'articles (21) pouvant opérer pour soulever les articles détectés (8) un à fois directement à partir de la surface (7) du convoyeur, caractérisé en ce qu'il est prévu des moyens pour collecter des articles plats (28) dans la position prédéterminée, coopérant avec le moyen de saisie/transfert d'articles (21) de façon à collecter sous forme d'une pile verticale (4) un nombre prédéterminé des articles saisis (8) transférés à cet endroit par le moyen de saisie/transfert d'articles (21), un moyen de contrôle de collecte, par exemple un poussoir, coopérant avec le moyen de collecte d'articles (28) pour ramener périodiquement sur la surface du même convoyeur (7) seulement celui des articles (8) qui est placé en bas de la pile et qui a été précédemment transféré dans cette pile (4) en réponse au transfert ultérieur de chaque article additionel (8) en haut de la pile, afin de maintenir le même nombre prédéterminé d'articles présents dans la pile dans le moyen de collecte d'articles (28), des moyens de mesure de caractéristique (40, 5) pour déterminer périodiquement la grandeur d'une caractéristique du nombre prédéterminé d'articles (8) collectés sous forme d'une pile verticale dans le moyen de collecte d'articles (28) et pour produire un signal de mesure de caractéristique correspondant, et un moyen de traitement de signaux, par exemple un ordinateur, pour traiter respectivement les signaux de détection et les signaux de mesure de caractéristique et pour fournir ainsi, à sa sortie, un signal de données représentant la grandeur de la caractéristique des articles (8).

2. Dispositif tel que revendiqué dans la revendication 1, caractérisé en ce que le moyen de détection d'articles (1) comprend au moins deux cellules photo-électriques (22) montées dans une tête au-dessus du transporteur (7), les cellules photo-électriques étant espacées l'une de l'autre transversalement par rapport au mouvement du convoyeur et étant adaptées pour émettre un signal indiquant la présence d'un article plat (8) en-

13 0 117 665 14

dessous, de telle sorte qu'une analyse des signaux provenant des cellules photo-électriques (22) indique les positions longitudinale et latérale d'articles plats respectifs sur le convoyeur (7).

3. Dispositif tel que revendiqué dans la revendication 1 ou 2, caractérisé en ce que le moyen de saisie/transfert d'articles (21) comprend un cylindre d'aspiration monté sur le convoyeur (7) et adapté pour être actionné lorsqu'un article plat (8) est situé à proximité de celui-ci mais non effectivement en contact avec lui.

4. Dispositif tel que revendiqué dans la revendication 3, caractérisé en ce qu'il comprend également un moyen (25) pour déplacer le cylindre d'aspiration (2) jusque dans une position située au-dessus d'un poste de mesure (27) où une pile (4) d'articles plats (8) peut être maintenue, et un moyen pour désactiver le cylindre d'aspiration (2) dans ladite position de manière à charger la pile (4) par le haut avec un article plat additionnel (8).

5. Dispositif tel que revendiqué dans l'une quelconque des revendications 1 à 4, caractérisé en ce qu'il est prévu des moyens (27) pour mesurer le poids des articles empilés (8).

6. Dispositif tel que revendiqué dans l'une quelconque des revendications 1 à 5, caractérisé en ce qu'il est prévu des moyens (40, 5) pour mesurer la hauteur des articles empilés (8).

7. Dispositif tel que revendiqué dans l'une quelconque des revendications 1 à 6, caractérisé en ce que le moyen de traitement de signaux peut opérer pour comparer la grandeur de la caractéristique mesurée avec une grandeur prédéterminée et, si la comparaison indique un écart sortant d'une gamme prédéterminée, alors le moyen de collecte d'articles (28) est libéré de tous les articles (8) collectés dans celui-ci.

8. Dispositif tel que revendiqué dans l'une quelconque des revendications 1 à 7, caractérisé en ce qu'il est prévu des moyens d'actionnement (16, 17, 18) pour déplacer le dispositif par rapport au convoyeur mobile (7) de telle sorte que le moyen de saisie/transfert d'articles (21) soit placé correctement par rapport aux articles (8) en vue de leur transfert jusqu'au moyen de collecte d'articles (28).

Fig.1.

0 117 665

Fig.2a.

MOTION

Fig.2b.

MOTION

## Fig.2c.